# NEUE EUROPÄISCHE PATENTSCHRIFT

(11) **EP 1 979 148 B2**
(45) Veröffentlichungstag und Bekanntmachung des Hinweises auf die Entscheidung über den Einspruch: **08.02.2017**
(45) Hinweis auf die Patenterteilung: 17.04.2013
(21) Anmeldenummer: 06804872.7
(22) Anmeldetag: 14.11.2006
(51) Int. Cl.: B29C 45/16

(54) **TRANSFERSYSTEM FÜR MEHRKOMPONENTEN SPRITZGIESSEN**
TRANSFER SYSTEM FOR MULTICOMPONENT INJECTION MOULDING
SYSTEME DE TRANSFERT POUR MOULAGE PAR INJECTION A PLUSIEURS COMPOSANTS

(30) Priorität: 23.01.2006 CH 1062006
(43) Veröffentlichungstag der Anmeldung: 15.10.2008
(73) Patentinhaber: Foboha GmbH, 77716 Haslach (DE); Trisa Holding AG, 6234 Triengen (CH)
(72) Erfinder: ARMBRUSTER, Rainer, 77709 Wolfach (DE); KIRCHHOFER, Roger, CH-5057 Reitnau (CH); ZURFLUH, Peter, CH-6055 Alpnach-Dorf (CH)
(74) Vertreter: Rentsch Partner AG
(86) Internationale Anmeldenummer: PCT/CH2006/000640
(87) Internationale Veröffentlichungsnummer: WO 2007/082394

(56) Entgegenhaltungen:
- EP-A2- 0 504 571
- EP-A2- 0 903 213
- EP-A2- 1 174 242
- EP-A2- 1 782 936
- DE-A1- 4 127 621
- DE-A1- 4 400 649
- DE-A1- 10 121 691
- US-A- 4 427 359
- US-A1- 2006 153 947
- ZAHORANSKY GROUP: "3k Spritzmontagewerkzeug" INTERNET ARTIKEL, [Online] 26. November 2005 (2005-11-26), Seiten 1-2, XP002420140 Gefunden im Internet: URL:http://web.archive.org/web/20051126201 019/www.zahoransky.com/produkte/injection_ moulds/injection_index.cfm> [gefunden am 2005-12-19] -& ZAHORANSKY GROUP: "3K Spritzmontagewerkzeug" INTERNET VIDEO, [Online] 19. Dezember 2005 (2005-12-19), XP002420141 Gefunden im Internet: URL:http://www.zahoransky.com/files/zfb_vi deo_dsl/spritzmontage.wmv> [gefunden am 2005-12-19]

## Beschreibung

Die Erfindung liegt auf dem Gebiet der Spritzgiesstechnologie, insbesondere der Mehrkomponenten Kunststoffspritzgiesstechnologie.

Aus dem Stand der Technik sind Vorrichtungen zum Mehrkomponentenspritzgiessen bekannt.

EP1155802, derselben Anmelderin, zeigt eine Vorrichtung zur Halterung von Mittelteilen in Mehrkomponenten Spritzgiessformen, die gegeneinander verschiebbar sind, so dass ein würfelförmiger Mittelteil einfach gewechselt werden kann.

US6783346, ebenfalls von derselben Anmelderin, zeigt eine Vorrichtung zur Herstellung von Artikeln die aus mehreren Kunststoffen bestehen. Die Vorrichtung weist einen drehbaren würfelförmigen Mittelteil. Der würfelförmige Mittelteil umfasst ein Transfersystem mittels dem ein Zwischenprodukt von einer ersten Kavität in eine weitere Kavität in derselben Ebene des Mittelteils gebracht wird, so dass z.B. ein Umspritzen mit einer weiteren Materialkomponente möglich wird.

DE 101 21 691 zeigt eine Vorrichtung zur Herstellung von Zahnbürsten. Ein Transfersystem welches auf Ketten basiert, dient zum Transportieren von Bürstenkörpern von einer ersten in eine zweite Bearbeitungsebene.

EP 1 174 242 zeigt eine Vorrichtung zum Spritzgiessen von aus mehreren Komponenten bestehenden Kunststoffkomponenten. Ein Handlingsystem dient zum Entformen von ersten Komponenten in einer ersten Trennebene und Überführen dieser von der ersten Trennebene in die zweite Trennebene.

EP 0 903 213 zeigt eine Vorrichtung zum Repositionieren von Artikeln in einer Trennebene einer Spritzgiessvorrichtung.

EP 0 504 571 zeigt ein in eine Spritzgiessform integriertes Handlingsystem, welches um eine zur Öffnungsrichtung parallele Achse drehbar angeordnet ist. Es dient zum Transportieren von Teilen aus einer ersten in eine zweite Kavität in derselben Trennebene.

US2006/153947 beschreibt ein Spritzgiesswerkzeug mit mehreren Etagen, sowie einem seitlich einfahrenden Transfersystem, welches durch seitliches ein und ausfahren Teile von einer Ebene in eine andere Ebene bewegt.

US 4,427,359 beschreibt ein Spritzblasformwerkzeug zum Herstellen von Flaschen aus Kunststoff. Die Vorrichtung weist einen translatorisch entlang von Holmen einer Spritzgiessmaschine verschiebbares Mitteil auf. Ausleger, welche unterhalb und oberhalb des Mittelteils drehbar gelagert sind, dienen zum Transport von Teilen von einer ersten in eine zweite Bearbeitungsebene.

Ausgehend von der US 4,427,359 besteht die Aufgabe der Erfindung darin, eine Vorrichtung zu zeigen, mittels denen Produkte aus mehreren Teilen insbesondere Produkte die aus mehreren Kunststoffkomponenten bestehen, effizienter hellrgestellt werden können.

Die Aufgabe wird durch die in den Patentansprüchen definierte Vorrichtung gelöst

Ein Teil/Produkt wird in einer ersten Verarbeitungsebene einer Spritzgiessvorrichtung hergestellt um dann mittels eines vorrichtungsintegrierten Transfersystems von der ersten in eine zweite Verarbeitungsebene gebracht zu werden. In der zweiten Verarbeitungsebene wird das Produkt einem weiteren Verarbeitungsschritt unterzogen, z.B. indem es mit einem weiteren Material wirkverbunden wird.

Die erste Verarbeitungsebene wird durch ein feststehendes erstes und ein in einer ersten Richtung translatorisch verfahrbares zweites Formteil (Formhälfte) gebildet. Die zweite Verarbeitungsebene wird durch die zweite und eine in der ersten Richtung translatorisch verfahrbares drittes Formteil (Formhälfte) gebildet. Bei einer bevorzugten Ausführungsform ist die zweite Formhälfte im Wesentlichen quaderförmig ausgebildet und weist an mindestens zwei gegenüberliegenden Seiten Kavitäten auf. Bei Bedarf ist die zweite Formhälfte drehbar angeordnet Je nach Ausführungsform sind die beweglichen Formhälften (Zweite und dritte Formhälfte) an den als Linearführung dienenden Holmen einer Spritzgiessmaschine mittels Haltemitteln abgestützt, resp. gelagert. Die Haltemittel können abnehmbar ausgebildet sein, derart dass sie ein einfaches Einsetzen und Ausbauen der Spritzgiessvorrichtung ermöglichen. In einer bevorzugten Ausführungsform umgreifen die Haltemittel die Holme halbschalenartig von oben, resp. liegen auf ihnen auf.

Beim Transport des Produktes von der ersten in die zweite Verarbeitungsebene wird das Produkt vorzugsweise um eine zur ersten Richtung im Wesentlichen senkrecht stehende Drehachse gedreht. Falls erforderlich wird das Produkt vor der Drehung so freigestellt, dass es bei der Drehung nicht kollidiert. In einer Ausführungsform der Vorrichtung verläuft die Drehachse im Wesentlichen durch die Mitte eines quaderförmigen Mittelteils.

Im Unterschied zu den aus dem Stand der Technik bekannten Vorrichtungen weist eine Ausführungsform der Vorrichtung anstelle einer drehbaren mittleren Formhälfte ein Transfersystem auf, welches dazu geeignet ist, Teile aus der ersten Verarbeitungsebene in die zweite Verarbeitungsebene zu bringen, indem es diese um die mittlere Formhälfte herumbewegt. Dazu ist das Transfersystem so ausgestaltet, dass es die Teile zuerst in der ersten Verarbeitungsebene soweit freistellt, dass diese ohne Kollisionsgefahr in die zweite Verarbeitungsebene transportiert werden können. Das Transfersystem weist dafür eine mit Bezug auf die Drehachse radial veränderbare Länge auf, so dass in der ersten Verarbeitungsebene gefertigte Teile aus den Kavitäten gehoben, bzw. freigestellt werden können. Nach der Drehung in die zweite Verarbeitungsebene werden die Teile aus der ersten Verarbeitungsebene in Kavitäten der zweiten Verarbeitungsebene eingebracht, wo sie anschliessend einem weiteren Verarbeitungsschritt unterzogen werden. Falls erforderlich ist das Transfersystem so ausgebildet, dass die Teile während dem Transport von der ersten in die zweite Verarbeitungsebene um mindestens eine weitere Achse um 90° oder 180° gedreht werden.

Das Transfersystem ist vorzugsweise ein Bestandteil der erfindungsgemässen Vorrichtung, z.B. indem es in die mittlere Formhälfte integriert ist. In einer Ausführungsform ist das Transfersystem um eine zur Bewegungsrichtung der mittleren Formhälfte im Wesentlichen senkrechte Drehachse drehbar angeordnet.

Je nach Ausführungsform weist das Transfersystem mehrere, um die Drehachse drehbare Ausleger auf, die in radialen Abständen zueinander angeordnet sind. Die Ausleger weisen in der Regel mindestens ein Haltemittel auf, das zur Halterung der Teile während dem Transport aus der ersten in eine weitere Verarbeitungsebene dient Die Ausleger sind vorzugsweise in radialer Richtung verstellbar ausgebildet, so dass sie eine der Drehbewegung überlagerte, radiale Verschiebung der Teile ermöglichen. Die Ausleger des Transfersystems können so ausgestaltet sein, dass sie zumindest einen Bereich einer Kavität bilden.

Das Transfersystem kann so ausgebildet sein, dass die Teile nach dem Transport alternativ in Kavitäten der zweiten Formhälfte und/oder der dritten Formhälfte eingebracht werden. Dies wird z.B. durch ein Transfersystem erzielt, das neben einem translatorischen und einem rotatortischen Freiheitsgrad, mindestens einen weiteren translatorischen und/oder mindestens einen weiteren rotatortischen Freiheitsgrad aufweist.

Ein Vorteil der Erfindung besteht darin, dass im Unterschied zu einem Würfelsystem die Anzahl der Kavitäten reduziert, resp. vereinfacht werden kann. Ein weiterer Vorteil besteht darin, dass durch die Freistellung eine bessere Kühlung erreicht wird.

Mit der Erfindung können z.B. Bürsten, insbesondere Zahnbürsten, die aus mehreren Materialkomponenten bestehen, besonders effizient hergestellt werden. Die Produkte lassen sich an der charakteristischen Trennlinie der Spritzgiessform unterscheiden von herkömmlich hergestellten Produkten.

### KURZBESCHREIBUNG DER FIGUREN

Die Erfindung wird anhand der in den nachfolgenden Figuren gezeigten Ausführungsformen näher erläutert. Es zeigen:
- Fig. 1: Eine erste Ausführungsform einer erfindungsgemässen Vorrichtung in geöffneter Position in perspektivischer Ansicht von schräg oben;
- Fig. 2: die Vorrichtung gemäss Figur 1 in perspektivischer Ansicht von schräg unten;
- Fig. 3: die Vorrichtung gemäss Figur 1 iri einer Draufsicht;
- Fig. 4: die Vorrichtung gemäss Figur 1 in einer Seitenansicht;
- Fig. 5: die Vorrichtung aus Fig. 1 in geschlossener Position in einer perspektivischen Ansicht;
- Fig. 6: die Vorrichtung aus Fig. 1 in geöffneter Position mit teilweise rotiertem Transfersystem in einer perspektivischen Ansicht.

### DETAILLIERTE BESCHREIBUNG AUSFÜHRUNGSFORMEN

Die Bezugszeichen sich entsprechender Teile sind in allen Figuren identisch.

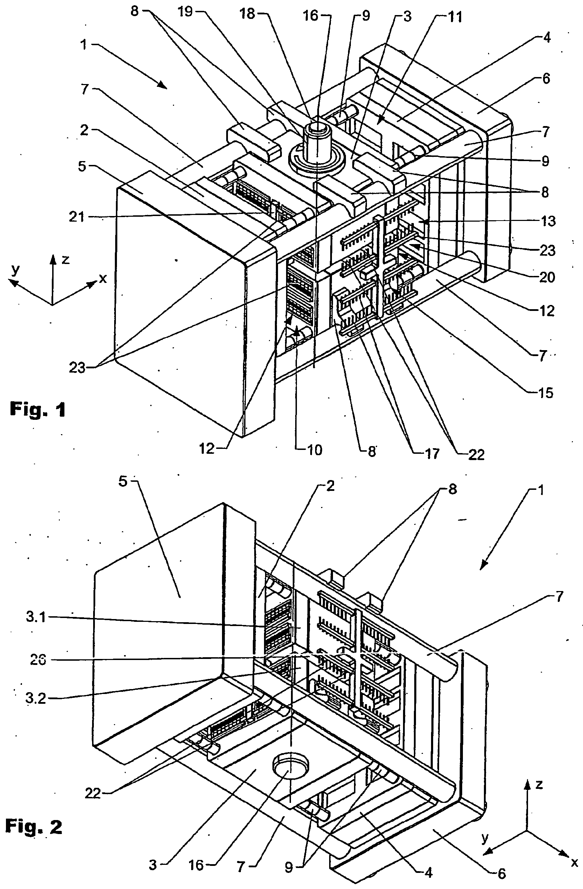

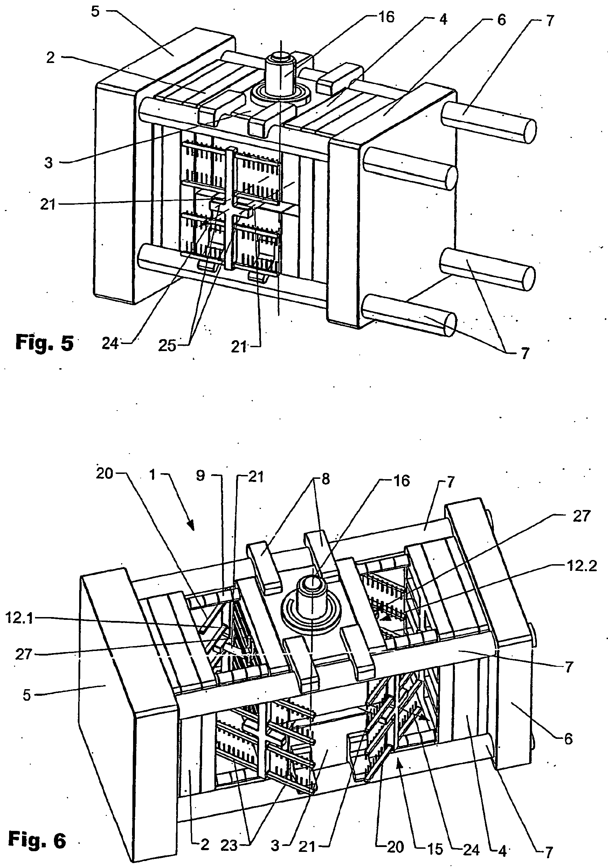

Die **Figur 1 bis 6** zeigen eine Ausführungsform einer Vorrichtung 1 zur Durchführung des erfindungsgemässen Verfahrens. Die **Figuren 1 bis 4** zeigen die Vorrichtung 1 in geöffneter Position und die **Figur 5** zeigt die Vorrichtung 1 in geschlossener Position. Figur 6 zeigt die Vorrichtung 1 in geöffneter Position und einem teilweise gedrehten Transfersystem 15.

Die Vorrichtung 1 weist eine feststehende erste Formhälfte 2, eine in einer ersten Richtung (x-Richtung) bewegliche dritte Formhälfte 4 und eine ebenfalls in der ersten Richtung bewegliche zweite Formhälfte 3 auf die zwischen der ersten und der dritten Formhälfte angeordnet ist. Die zweite Formhälfte 3 ist in der gezeigten Ausführungsform quaderförmig ausgestaltet und weist an zwei gegenüberliegenden Seiten Kavitäten 12 auf, die mit korrespondierenden Kavitäten 13 der ersten und der dritten Formhälfte 2, 4 zusammenwirken.

Die erste Formhälfte 2 ist hier an einer feststehenden ersten Maschinenplatte 5 und die dritte Formhälfte an einer beweglichen zweiten Maschinenplatte 6 einer Spritzgiessmaschine (nicht näher dargestellt) befestigt. Die bewegliche zweite Maschinenplatte 6 ist entlang von Holmen 7 (x-Richtung) der Spritzgiessmaschine linear verschiebbar gelagert. Die zweite Formhälfte 3 weist in der gezeigten Ausführungsform Haltemittel 8 auf, die zur Abstützung auf den Holmen 7 dienen. Die Haltemittel 8 dienen als Linerlager mittels denen die zweite Formhälfte entlang der Holmen 7 verschiebbar ist und sind so ausgebildet, dass die Vorrichtung 1 einfach aus der Spritzgiessmaschine herausgenommen werden kann. Ein Koordinationsmittel 9 stellt sicher, dass die mittlere Formhälfte 3 beim Öffnen und Schliessen der Vorrichtung 1 sich immer ungefähr in der Mitte zwischen der ersten und der dritten Formhälfte 2; 4 befindet. Als Koordinationsmittel eignen sich entsprechend angeordnete Spindeln oder Hyraulikantriebe.

Eine erste Verarbeitungsebene 10 befindet sich zwischen der ersten und der zweiten Formhälfte 2, 3 und eine zweite Verarbeitungsebene 11 befindet sich zwischen der zweiten und der dritten Formhälfte 3, 4.

Die mittlere Formhälfte 3 weist ein Transfersystem 15 auf, das zum Transport von Teilen 17 von der ersten in die zweite Verarbeitungsebene 10, 11 dient. Das Transfersystem 15 ist um eine Drehachse 16 (z-Richtung) drehbar angeordnet und weist Ausleger 20 auf, die zur temporären Halterung und zum Transport der Teile 17 von der ersten in die zweite Verarbeitungsebene 10, 11 dienen. Die Ausleger 20 sind an Auslegerarmen 21 befestigt, die im Wesentlichen senkrecht zur Drehachse 16 angeordnet sind. Eine radiale Länge (vgl. Figur 6, Pfeil 24) der Auslegerarme 21 ist verstellbar, so dass der radiale Abstand der Ausleger 20 zur Drehachse 16 verstellbar ist. Durch diese radiale Verstellbarkeit ist es möglich ein Teil 17 nach dem Öffnen der Verarbeitungsebenen 10, 11 der Vorrichtung 1 aus einer ersten Kavität 12.1 der ersten Verarbeitungsebene 10 herauszuheben (vgl. Figur 6) und in eine Position zu bringen, in der es mittels dem Ausleger 20 um die Drehachse 16 gedreht und in eine Position oberhalb einer weiteren Kavität 12.2 (vgl. Figur 6) der zweiten Verarbeitungsebene 11 gebracht werden kann. Durch Verkürzung der radialen Länge des Auslegerarmes wird das Teil in die weitere Kavität eingebracht, wo es nach dem Schliessen der Vorrichtung 1 einem weiteren Bearbeitungsschritt unterzogen wird. In einer Ausführungsform können die Auslegerarme 21 teleskopartig verstellt werden.

Die gezeigte Vorrichtung 1 weist vier Ausleger 20 auf, die an vier sternförmig und im Abstand von 90° zueinander angeordneten Auslegerarmen 21 angebracht sind. Die Auslegerarme 21 bestehen hier wiederum aus zwei Teleskopstangen 22, die je nach Anwendungsgebiet hydraulisch, mechanisch oder elektrisch verstellbar sind. Die Anordnung der Teleskopstangen ist in Figur 5 durch Linien 25 schematisch dargestellt.

Wie u. a. aus Figur 2 hervorgeht, sind die Teleskopstangen 22 in vertikaler Richtung (z-Richtung) so angeordnet, dass der quaderförmige Mittelteil 3 in eine untere und eine obere Hälfte 3.1, 3.2 unterteilt werden. Die Teleskopstangen 22 sind in einer radialen, schlitzförmigen Öffnung 26 angeordnet und im Innern des mittleren Formteils 3 drehfrei gelagert.

Wie u. a. in **Figur 1** zu erkennen ist, weisen die Ausleger 20 Haltemittel 23 auf, die in Kavitäten 12, 13 der ersten Verarbeitungsebene 10 eingreifen, resp. einen Bereich der Kavitäten 12 bilden. Die Haltemittel 23 sind so ausgestaltet, dass die Teile 17, die z.B. durch Einspritzen von Kunststoff in die Kavitäten 12, 13 gebildet werden, an den Haltemitteln 23 temporär haften, so dass sie von der ersten in die zweite Verarbeitungsebene 10, 11 transportiert werden können. Die Haltemittel 23 können je nach Ausgestaltung an den hergestellten Teilen im Interaktionsbereich charakteristische Trennlinien bewirken anhand derer die Produkte identifizierbar sind.

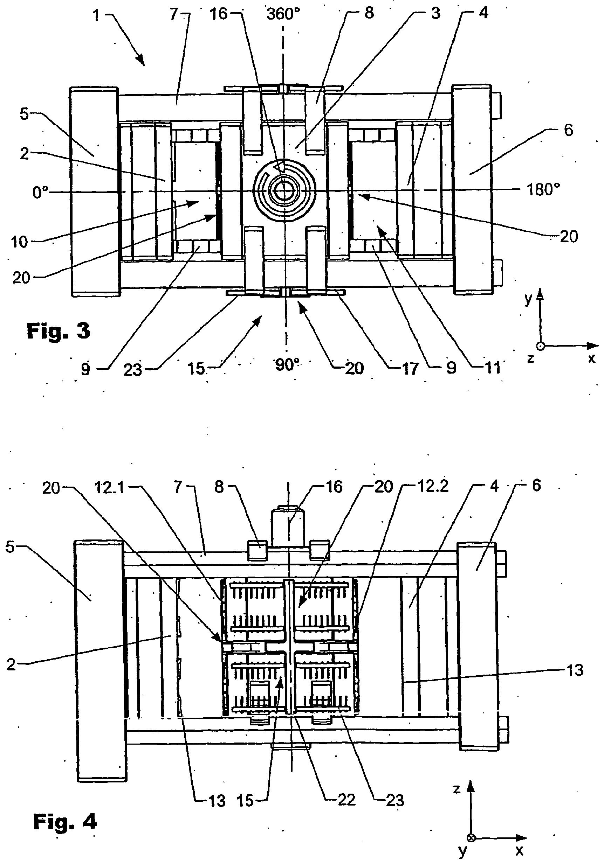

In der gezeigten Ausführungsform rotiert das Transfersystem 15 im Gegenuhrzeigersinn um die Drehachse 16. Teile 17, die in ersten Verarbeitungsebene 10 hergestellt wurden, werden nach dem Öffnen der Spritzgiessvorrichtung 1 mittels den Auslegern 20 des Transfersystems 15 von der ersten in die zweite Verarbeitungsebene 10, 11 transportiert. Bei der gezeigten Ausführungsform werden die Teile 17 in 90° Schritten bewegt, so dass sie vor dem Bearbeiten in der zweiten Verarbeitungsebene 11 einer Kühlphase bei 90° ausserhalb der Vorrichtung 1 ausgesetzt sind. Fertige Teile werden entweder bei 180°, nach der Bearbeitung im Bereich der zweiten Verarbeitungsebene 11, oder bei 270° (vgl. Figur 3) aus der Vorrichtung 1 entnommen. Eine Entnahme bei 270° bietet den Vorteil, dass die zu entnehmenden Teile einer weiteren Kühlphase ausgesetzt werden können.

Wie aus **Figur 6** hervorgeht, weisen die Haltemittel 23 einen zur zweiten Formhälfte 3 hin konischen Querschnitt auf, der mit einem entsprechenden Querschnitt von Vertiefungen 27 der zweiten Formhälfte 3 im Bereich der ersten und der zweiten Verarbeitungsebene 10, 11 korrespondiert. Beim Schliessen der Spritzgiessvorrichtung 1 werden die Haltemittel 23 in die Vertiefungen 27 gesenkt, wo sie durch das Schliessen der Form 1 arretiert werden. Der konische Querschnitt dient einerseits der Zentrierung und andererseits unterstützt der die Dichtigkeit.

## Patentansprüche

1. Vorrichtung (1) zur Herstellung eines Produktes aus mehreren Teilen (17) durch Spritzgiessen von Kunststoff mit
a. einer ersten Verarbeitungsebene (10), die durch eine feststehende erste und eine in einer ersten Richtung (x) verschiebbare zweite Formhälfte (2, 3) gebildet wird,
b. einer zweiten Verarbeitungsebene (11), die durch die zweite und eine in der ersten Richtung (x) verschiebbare dritte Formhälfte (3, 4) gebildet wird,
c. einem um eine Drehachse (16) drehbaren Transfersystem (15) das mit der zweiten Formhälfte (3) wirkverbunden ist und
d. mehrere an Auslegerarmen (21) befestigte Ausleger (20) aufweist, welche bei geöffneter Vorrichtung (1) zum Transport von in der ersten Verarbeitungsebene (10) gebildeten Teilen (17) in die zweite Verarbeitungsebene (11) dient, wobei
e. die zweite Formhälfte (3) an Holmen (7) einer Spritzgiessmaschine abgestützt und entlang dieser verschiebbar ist,
f. wobei die zweite Formhälfte (3) Haltemittel (8) aufweist die zur Abstützung und Lagerung der zweiten Formhälfte (3) an den Holmen (7) der Spritzgiessmaschine dienen¹
¹ Ursprünglicher Patentanspruch 10 (WO2007/082394)
**dadurch gekennzeichnet, dass**
g. die zweite Formhälfte quaderförmig ausgebildet ist und an zwei gegenüberliegenden Seiten Kavitäten (12.1, 12.2) aufweist, sowie eine untere und eine obere Hälfte (3.1, 3.2) aufweist, welche durch eine radiale, schlitzförmige Öffnung (26) voneinander beabstandet sind, wobei
h. die Auslegerarme (21) in der radialen, schlitzförmigen Öffnung (26) zwischen der oberen und der unteren Hälfte (3.1, 3.2) der zweiten Formhälfte (3) um die Drehachse (16) drehbar angeordnet sind, und
i. die radiale Länge (24) der Auslegerarme (21) verstellbar ist, so dass in der ersten Verarbeitungsebene (10) hergestellte Teile (17) bei geöffneter Vorrichtung (1) aus ihren Kavitäten (12.1) herausgehoben und nach der Drehung um die Drehachse (16) in die zweite Verarbeitungsebene (11) von einer Position oberhalb einer weiteren Kavität (12.2) der zweiten Verarbeitungsebene (11) durch Verkürzen der radialen Länge (24) eines Auslegerarms (21) in die weitere Kavität (12.2) eingebracht werden kann.
j. die Haltemittel (8) der zweiten Formhälfte (3) abnehmbar ausgestaltet sind².
² Ursprünglicher Patentanspruch 12 (WO2007/082394)

2. Vorrichtung (1) gemäss Patentanspruch 1, **dadurch gekennzeichnet, dass** die Ausleger (20) Haltemittel (23) aufweisen, welche in Kavitäten 1 (12) der ersten Verarbeitungsebene (10) eingreifen und einen Teil der Kavität (12) bilden, so dass die Teile (17) an den Haltemitteln (23) temporär haften, so dass sie von der ersten in die zweite Verarbeitungsebene (11) transportiert werden können.

3. Vorrichtung (1) gemäss Patentanspruch 1 oder 2, **dadurch gekennzeichnet, dass** das Transfersystem (15) vier sternförmig im Abstand von 90° zueinander angeordnete Auslegerarme (21) aufweist.

4. Vorrichtung (1) gemäss Patentanspruch einem der vorangehenden Patentansprüche, **dadurch gekennzeichnet, dass** die Auslegerarme (21) teleskopartig verstellbar sind.

5. Vorrichtung (1) gemäss Patentanspruch 4, **dadurch gekennzeichnet, dass** die Auslegerarme (21) aus zwei Teleskopstangen (22, 25) besteht.

6. Vorrichtung (1) gemäss Patentanspruch 5, **dadurch gekennzeichnet, dass** die Teleskopstangen (22) hydraulisch, mechanisch oder elektrisch verstellbar sind.

7. Vorrichtung (1) einem der vorangehenden Patentansprüche, **dadurch gekennzeichnet, dass** die Haltemittel (23) einen zur zweiten Formhälfte hin konischen Querschnitt aufweisen, der mit einem entsprechenden Querschnitt von Vertiefungen (27) der zweiten Formhälfte (3) im Bereich der ersten und der zweiten Verarbeitungsebene (10, 11) korrespondiert.

8. Vorrichtung (1) gemäss einem der vorangehenden Patentansprüche, **dadurch gekennzeichnet, dass** das Transfersystem (15) so ausgebildet ist, dass die Teile (17) nach dem Transport alternativ in Kavitäten der zweiten Formhälfte und/oder der dritten Formhälfte (3, 4) eingebracht werden.

9. Vorrichtung (1) gemäss einem der vorangehenden Patentansprüche, **dadurch gekennzeichnet, dass** das Transfersystem (15) so ausgebildet ist, dass die Teile (17) während dem Transport von der ersten in die zweite Verarbeitungsebene (10, 11) um mindestens eine weitere Achse um 90° oder 180° gedreht werden.

## Claims

1. Apparatus (1) for producing a product consisting of a plurality of parts (17) by injection moulding of plastic, with
a. a first processing plane (10) which is formed by a first mould half (2) which is fixed and by a second mould half (3) which is displaceable in a first direction (x),
b. a second processing plane (11) which is formed by the second mould half (3) and a third mould half (4) which is displaceable in the first direction (x),
c. a transfer system (15) which is rotatable about an axis of rotation (16) and is operatively connected to the second mould half (3), and
d. a plurality of arms (20) fastened to an extension arm (21) which, when the apparatus (1) is open, serve to transport parts (17) formed in the first processing plane (10) into the second processing plane (11), wherein
e. the second mould half (3) is supported on struts (7) of an injection-moulding machine and is displaceable along said struts,
f. wherein the second mould half (3) comprises retaining means (8) to support and amount the second mould half (3) on the struts (7) of the injection moulding machine
**characterized in that**
g. the second mould half is of cuboidal design and has cavities (12.1, 12.2) on two opposite sides, and also has a lower and an upper half (3.1, 3.2) which are spaced apart from each other by a radial, slot-shaped opening (26), wherein
h. the extension arms (21) are arranged in the radial, slot-shaped opening (26) between the upper and the lower half (3.1, 3.2) of the second mould half (3) so as to be rotatable about the axis of rotation (16), and
i. the radial length (24) of the extension arms (21) is adjustable, and therefore, when the apparatus (1) is open, parts (17) produced in the first processing plane (10) can be lifted out of the cavities (12.1) thereof and, after rotation about the axis of rotation (16), can be introduced into the second processing plane (11) from a position above a further cavity (12.2) of the second processing plane (11) into the further cavity (12.2) by shortening the radial length (24) of an extension arm (21)
i. the retaining means (8) of the second mould half (3) are configured to be removable.

2. Apparatus (1) according to Claim 1, **characterized in that** the arms (20) have retaining means (23) which engage in cavities (12) of the first processing plane (10) and form a part of the cavity (12) such that the parts (17) temporarily adhere to the retaining means (23) and can therefore be transported from the first into the second processing plane (11).

3. Apparatus (1) according to Claim 1 or 2, **characterized in that** the transfer system (15) has four extension arms (21) arranged in a star-shaped manner at a distance of 90° with respect to one another.

4. Apparatus (1) according to one of the preceding claims, **characterized in that** the extension arms (21) are adjustable telescopically.

5. Apparatus (1) according to Claim 4, **characterized in that** the extension arm (21) consists of two telescopic rods (22, 25).

6. Apparatus (1) according to Claim 5, **characterized in that** the telescopic rods (22) are adjustable hydraulically, mechanically or electrically.

7. Apparatus (1) according to one of the preceding claims, **characterized in that** the retaining means (23) have a conical cross-section towards the second mould half, said cross-section corresponding to a corresponding cross-section of depressions (27) of the second mould half (3) in the region of the first and the second processing planes (10, 11).

8. Apparatus (1) according to one of the preceding claims, **characterized in that** the transfer system (15) is designed in such a manner that, after the transport, the parts (17) are introduced alternatively into cavities of the second mould half and/or of the third mould half (3, 4).

9. Apparatus (1) according to one of the preceding claims, **characterized in that** the transfer system (15) is designed in such a manner that, during the transport from the first into the second processing plane (10, 11), the parts (17) are rotated about at least one further axis by 90° or 180°.

## Revendications

1. Dispositif (1) de fabrication d'un produit composé de plusieurs parties (17) par moulage par injection de matière plastique avec :
a. Un premier plan de traitement (10) formé par les moitiés de moule (2, 3) comprenant une première moitié de moule fixe et une deuxième moitié de moule pouvant être déplacée dans une première direction (x) ;
b. un deuxième plan de traitement (11) formé par les moitiés de moule (3, 4) comprenant la deuxième moitié de moule et une troisième moitié de moule pouvant être déplacée dans la première direction (x) ;
c. un système de transfert (15) pouvant pivoter autour d'un axe de rotation (16) et relié activement à la deuxième moitié de moule (3) ; et
d. comportant une pluralité de potences (20) fixée à un bras de potence (21) servant, lorsque le dispositif (1) est ouvert, au transport, dans le deuxième plan de traitement (11), des parties (17) formées dans le premier plan de traitement (10) ;
e. la deuxième moitié de moule (3) étant soutenue contre les barres (7) d'une machine de moulage par injection et pouvant être déplacée le long de celle-ci ;
f. dans lequel la deuxième moitié de moule (3) comporte moyens d'arrêt (8) pour supporter et monter la deuxième moitié de moule (3) sur les barres (7) de la machine de moulage par injection
**caractérisé en ce que** :
g. la deuxième moitié de moule prend une forme de parallélépipède rectangle et comporte deux cavités (12.1, 1 2.2) positionnées au niveau des deux côtés opposés, ainsi que des moitiés supérieure et inférieure (3.1, 3.2) séparées l'une de l'autre par une ouverture (26) radiale en forme de fente ;
h. les bras de potence (21) sont disposés de façon à pouvoir pivoter dans l'ouverture (26) radiale en forme de fente prévue entre les moitiés supérieure et inférieure (3.1, 3.2) de la deuxième moitié de moule (3), autour de l'axe de rotation (16) ; et
i. la longueur radiale (24) des bras de potence (21) est réglable, de sorte que les parties (17) fabriquées dans le premier plan de traitement (10) sont soulevées et sorties de leurs cavités (12.1) lorsque le dispositif (1) est ouvert avant d'être amenées, après pivotement autour de l'axe de rotation (16), dans le deuxième plan de traitement (11), d'une position située au-dessus d'une cavité (12.2) supplémentaire du deuxième plan de traitement (11) dans la cavité (12.2) supplémentaire, par raccourcissement de la longueur radiale (24) d'un bras de potence (21)
j. les moyens de d'arrêt (8) de la deuxième moitié de moule (3) sont conçus pour pouvoir être enlevés.

2. Dispositif (1) selon la revendication 1, **caractérisé en ce que** les potences (20) comportent des moyens d'arrêt (23) s'emboîtant dans les cavités (12) du premier plan de traitement (10) et formant une partie de la cavité (1 2), de façon à ce que les parties (17) adhèrent temporairement aux moyens d'arrêt (23), permettant ainsi leur transport du premier au deuxième plan de traitement (11).

3. Dispositif (1) selon la revendication 1 ou 2, **caractérisé en ce que** le système de transfert (15) comporte quatre bras de potence (21) disposés à une distance de 90° les uns par rapport aux autres, en forme d'étoile.

4. Dispositif (1) selon l'une quelconque des revendications précédentes, **caractérisé en ce que** les bras de potence (21) peuvent se déplacer de façon télescopique.

5. Dispositif (1) selon la revendication 4, **caractérisé en ce que** les bras de potence (21) se composent de deux barres télescopiques (22, 25).

6. Dispositif (1) selon la revendication 5, **caractérisé en ce que** les barres télescopiques (22) peuvent être déplacées de façon hydraulique, mécanique ou électrique.

7. Dispositif (1) selon l'une quelconque des revendications précédentes, **caractérisé en ce que** les moyens d'arrêt (23) présentent une section transversale conique en direction de la deuxième moitié de moule coïncidant avec une section transversale correspondante des renfoncements (27) de la deuxième moitié de moule (3) dans la région des premier et deuxième plans de traitement (10, 11).

8. Dispositif (1) selon l'une quelconque des revendications précédentes, **caractérisé en ce que** le système de transfert (15) est réalisé de telle sorte que les parties (17) sont amenées après le transport en alternance dans les cavités de la deuxième moitié de moule et/ou de la troisième moitié de moule (3, 4).

9. Dispositif (1) selon l'une quelconque des revendications précédentes, **caractérisé en ce que** le système de transfert (15) est réalisé de telle sorte que les parties (17) sont pivotées de 90° ou de 180° autour d'au moins un axe supplémentaire pendant le transport du premier dans le deuxième plan de traitement (10, 11).
